(19) 

Europäisches Patentamt

European Patent Office

Office européen des brevets

(11) **EP 2 838 790 B1**

(12) **EUROPEAN PATENT SPECIFICATION**

(45) Date of publication and mention of the grant of the patent:
**30.11.2016 Bulletin 2016/48**

(21) Application number: **13722274.1**

(22) Date of filing: **19.04.2013**

(51) Int Cl.:
*B64B 1/32* (2006.01)     *B64C 39/02* (2006.01)
*G03B 15/00* (2006.01)     *G03B 21/585* (2014.01)
*G03B 37/04* (2006.01)

(86) International application number:
**PCT/CH2013/000066**

(87) International publication number:
**WO 2013/155639 (24.10.2013 Gazette 2013/43)**

(54) **AIRCRAFT, METHODS FOR PROVIDING OPTICAL INFORMATION, METHOD FOR TRANSMISSION OF ACOUSTIC INFORMATION AND METHOD FOR OBSERVING OR TRACKING AN OBJECT**

FLUGZEUG, VERFAHREN ZUR BEREITSTELLUNG OPTISCHER INFORMATIONEN, VERFAHREN ZUR ÜBERTRAGUNG AKUSTISCHER INFORMATIONEN SOWIE VERFAHREN ZUR BEOBACHTUNG ODER VERFOLGUNG EINES OBJEKTS

AÉRONEF, PROCÉDÉS DE FOURNITURE D'INFORMATIONS OPTIQUES, PROCÉDÉ DE TRANSMISSION D'INFORMATIONS ACOUSTIQUES ET PROCÉDÉ D'OBSERVATION OU DE POURSUITE D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2012   CH 548122012**

(43) Date of publication of application:
**25.02.2015   Bulletin 2015/09**

(73) Proprietors:
• **ETH Zurich**
  **8092 Zürich (CH)**
• **Disney Research Zurich**
  **8092 Zurich (CH)**

(72) Inventors:
• **LEDERGERBER, Anton**
  **6214 Schenkon (CH)**
• **SCHAFFNER Andreas**
  **4455 Zunzgen (CH)**
• **RUCH, Claudio**
  **4464 Maisprach (CH)**
• **MEIER, Daniel**
  **4153 Reinach (CH)**
• **WEICHART, Johannes**
  **9496 Balers (FI)**

• **GASSER, Lukas**
  **4146 Hochwald (CH)**
• **MÜRI, Luca**
  **4410 Liestal (CH)**
• **KÄCH, Miro**
  **8400 Winterthur (CH)**
• **KREBS, Matthias**
  **7310 Bad Ragaz (CH)**
• **BURRI, Matthias**
  **8092 Zürich (CH)**
• **MOSIMANN, Lukas**
  **4059 Basel (CH)**
• **VUILLIOMENET, Nicolas**
  **4469 Anwil (CH)**
• **MICHAUD, Randy**
  **1873 Val-d'Illiez (CH)**
• **LAUBE, Simon**
  **8952 Schlieren (CH)**
• **BEARDSLEY, Paul**
  **8032 Zürich (CH)**
• **ALONSO MORA, Javier**
  **8092 Zürich (CH)**
• **SIEGWART, Roland Yves**
  **6430 Schwyz/SZ (CH)**
• **LEUTENEGGER, Stefan**
  **8092 Zürich (CH)**
• **RUDIN, Konrad**
  **1794 Salvenach/FR (CH)**

**(Cont. next page)**

(74) Representative: **Strässle, Simon**
**Isler & Pedrazzini AG**
**Postfach 1772**
**8027 Zürich (CH)**

(56) References cited:
**WO-A1-99/54863      DE-A1- 10 045 825**
**DE-A1- 10 210 542     DE-U1- 9 302 733**
**US-A1- 2005 219 257   US-B2- 7 055 777**

**Description**

The present invention relates to an aircraft, particularly an aerostat, a method for providing optical information to a person in the surrounding of the flying aircraft, a method for providing optical information about an object and/ or for surveying an object by the aircraft, a method for transmission of acoustic information by the aircraft and a method for observing or tracking an object by the aircraft.

Aircraft are machines using support from the air in order to fly in the air.

A differentiation of aircraft can be made between aerostats and aerodynes, wherein aerostats use buoyancy to float in the air. Well-known examples of aerostats are the "Zeppelins".

Further developments in that field of technology relate to special applications of the aerostats.

Aerostats have the main characteristic of creating buoyancy with a lighter-than-air gas such as helium or hydrogen. The density difference between the lighter-than-air gas and the surrounding air creates buoyancy force that lifts the aerostat or significantly decreases its weight. For this purpose, the lighter-than-air gas must be stored in a container. Such container may be provided as a semi-rigid or rigid construction (airship) or as a non-rigid construction that keeps shape due to overpressure of the inside gas (blimp).

Aerostats or aerostatic systems are constructed in different sizes varying from 30 cm to 245 m and in different designs, for example in a cigar-like shape.

From US4848705, herewith incorporated by reference, an aircraft designed for use in outer space is known. The aircraft comprises actuation units located on a rigid structure that is characterized by a tetrahedron shape.

US5082205, herewith incorporated by reference, discloses an aircraft having a spherical body, wherein the spherical body contains the lighter-than-air-gas. Actuators of the aircraft are positioned outward on the end of a rigid structure in one plane. Obviously, such aircraft is not rotatable around the longitudinal axis. The centre of gravity (CG) is most likely in the lower part of the aircraft, which warrants a defined stability position of the system, particularly an asymptotically stable equilibrium point.

US5383627, herewith incorporated by reference, describes an airship characterized by different shapes of the cross sections in each spatial dimension. Thus, the drag coefficient as well as other fluid dynamic properties differ in relation to the movement in different directions. Additionally, mechanical properties such as the principal moments of inertia substantially vary as well depending on the respective spatial dimension.

The same applies for the aircraft known from US7055777, herewith incorporated by reference, wherein the center of gravity is also not collocated with the center of buoyancy in the aircraft. Further, actuators are placed in one plane on the surface of the aircraft's hull. The aircraft described in US 20 070 023 581, herewith incorporated by reference, is able to move straight in space in arbitrary orientations and rotate simultaneously around an arbitrary axis. Keeping stationary in arbitrary positions or orientations is also possible. These functions are realized by six actuation units mounted on a central body. However, that aircraft is not an aerostat.

Multi rotor systems as shown in US 20 070 023 581, herewith incorporated by reference, consume a lot of energy to maintain their position in the air and have therefore short flight duration. Additionally, they are dangerous when falling down due to breakdowns or other problems.

Document DE102 10 542 discloses a remote controlled balloon containing a camera on its hull.

Fixed-wing aircraft have the disadvantage not being able to perform slow movements or hover. However, existing aerostatic systems are very slow and sensitive to wind.

In most existing aerostats the centre of buoyancy is not coincident with the centre of gravity. This results in a stable flight orientation. Changing this orientation requires a considerable amount of energy.

Further, most existing aerostat systems do have an ellipsoidal or cigar shape. This design significantly reduces the wind resistance in one direction, but also increases the wind resistance in the directions perpendicular to this main direction as well. Additionally, most airships can easily adjust their yaw angle, but there is also a limited possibility to adjust the pitch angle and the roll angle.

Further, various situations are known in which information from and/ or an object have to be provided, preferably from or to an elevated position.

Based on this background, it is the objective of the invention to provide an aircraft with small power consumption during a long flight time, in combination with flexible maneuverability and the ability to provide or acquire information for or about objects.

As a solution of the above mentioned problems an aircraft is provided as claimed in claim 1. Preferred embodiments of that aircraft are claimed in dependent claims 2 to 11.

Further, it is provided a method for providing optical information to a person in the surrounding of the flying aircraft as claimed in claim 12, a method for providing optical information about an object and/ or surveying of an object by means of the flying aircraft as claimed in claim 13, a method for transmission of acoustic information by means of the flying aircraft as claimed in claim 14 and a method for observing or tracking an object, wherein the object is observed and/ or tracked by a camera of the flying aircraft as claimed in claim 15.

According to the invention, an aircraft is provided having a spherical body that generates buoyancy or which may generate buoyancy when filled with gas, wherein the aircraft further comprises four actuation units arranged on the surface of the body for movement of the aircraft in a translation and/ or rotation through the air, and at least one camera arranged on or in the surface of the body according to claim 1.

In a preferred embodiment, the spherical body has the shape of a hollow ball filled or fillable with gas lighter than air. Accordingly, the aircraft is an aerostat, having preferable the shape of a blimp, particularly of a balloon. Due to the four actuation units of the aircraft, the aircraft can be moved in an arbitrary direction and/ or rotated simultaneously. The camera is directed by rotating the aircraft.

Particularly, the arrangement of actuation units on the surface of the body is configured to provide the actuation force of the respective actuation unit at a position having a distance between 101%... 120% of the radius of the body, preferably 103% ...108%.

The body is at least partially filled with gas having a lower density than air. Hence, the buoyancy of the aircraft is based on lighter-than-air-technology/principle. Preferably, the gas is helium.

In a preferred embodiment, the gravity $F_g$ and the buoyancy force $F_b$ of the aircraft fulfill the following condition:

$$F_g = 1 \ldots 1{,}2 \; F_b.$$

Preferably, the aircraft is made marginally heavier than air to allow safe landing in case of motor or electronics breakdown, for example the gravity $F_g$ is 2... 5 % stronger than the buoyancy force $F_b$.

Preferably, the aircraft's center of gravity exactly coincides with the center of buoyancy of the aircraft, wherein the center of buoyancy is the position where the resulting buoyancy force acts. The center of gravity is where the resulting gravity force acts.

In one embodiment of the aircraft, the four actuation units are positioned in a first tetrahedral alignment on the body.

In a preferred solution, the aircraft further comprises at least one energy supply unit, wherein the camera or cameras and the energy supply unit or energy supply units are arranged in a second tetrahedral alignment on and/ or in the body. Accordingly, the energy supply unit or units and the camera or a plurality of cameras form together a second tetrahedron. The energy supply unit or units and the camera or a plurality of cameras can be at least a part of a payload of the aircraft, which may comprise additionally or instead sensors, actuators and modules for entertainment and interaction.

The energy supply unit may have battery packs, for instance three battery packs. Alternatively, the energy supply unit may have a power supply using fuel cells, solar panels, combustion engines or other solutions.

In that embodiment, the center of gravity of the system of actuation units should substantially coincide with the center of gravity of the system of cameras and energy supply units.

Preferably, the center of gravity of the system of actuation units exactly coincides with the center of gravity of the system of cameras and energy supply units.

That is, the system of actuation units and the payload as mentioned above are arranged in such a manner that the center of gravity (CG) of the aircraft substantially coincides with the center of buoyancy (CB) of the aircraft.

This means that if the actuation units are arranged in a first tetrahedral alignment, the center of gravity of the first tetrahedral alignment substantially coincides with the center of gravity of the second tetrahedral alignment.

Thus, the center of gravity of the system of actuation units arranged in the first tetrahedral alignment substantially coincides with the center of gravity of the system of cameras and energy supply units arranged in the second tetrahedral alignment.

Preferably, the distance between the respective positions of the centers of gravity of the first tetrahedral alignment and the second tetrahedral alignment should be less than 5% of the diameter of the body. A typical size of the body is a diameter of about 2,7 m.

In a preferred embodiment, a respective actuation unit has a propeller and a motor connected to the propeller.

An arrangement of the shaft of the propeller substantially perpendicular related to a radial axis extending radially with regard to the body is advantageous, wherein the shaft of the propeller is also rotatable about the radial axis. Particularly, the blades of the propeller are rotatable about the propeller shaft, wherein the shaft is substantially perpendicular, preferably exact perpendicular, with regard to a radial axis perpendicular to a fictive plane extending tangentially to the surface of the body. Further, the shaft is rotatable about that radial axis in order to direct the thrust of the propeller in a desired direction parallel to a tangent on the surface of the body at the position of the actuation unit.

In order to adjust the rotation angle of the propeller axis, the actuation unit comprises an angle adjusting means. Thus, the direction of the thrust generated by the respective propeller is adjustable. Hence, the aircraft can be accelerated in a translation and/ or rotation movement simultaneously by the four propellers.

Furthermore, a system of a plurality of aircraft is provided, wherein the plurality of aircraft forms a swarm.

A further aspect of the present invention is a method for providing optical information to a person in the surrounding of the flying aircraft, wherein an image is projected onto the inner surface of the hollow body in such manner that the image is visible on the outer surface of the body. This can be achieved by a projector in the hollow body projecting an image or movie onto the inside of the hull of the body. Due to transparency of the hull, the image is visible from the outside of the body. In a similar way, an optical information can be provided by projecting an image onto the outer surface of the hull by one or more beamers positioned outside the aircraft, especially on the ground.

Further, a method for providing optical information about an object and/ or surveying an object is provided, wherein an image of the object is recorded by a camera of the flying aircraft. In case of surveying or measuring an object, the dimensions of the object shown in the image are used for surveying. Taking optical information and/ or surveying may be carried out with static or moving objects.

A further aspect of the invention is a method for transmission of acoustic information by means of the flying aircraft, wherein the aircraft comprises at least one microphone and/ or a loudspeaker, and acoustic information is provided by the loudspeaker of the aircraft and/ or acoustic information is recorded by the microphone of the aircraft.

Especially in case of providing acoustic information by the loudspeaker, the aircraft may be used as a guide.

The invention also relates to a method for observing or tracking an object, wherein the object is observed and/ or tracked by a camera of the flying aircraft. The information about the object and/ or its movement is transferred by the aircraft.

The advantages of the aircraft according to the invention are as follows:

A flying camera is provided, having the following properties:

- good wind resistance; i.e. flight manoeuvres are possible up to wind of Beaufort 2,

- high agility; i.e. arbitrary combinations of translation and rotation in three-dimensional space are possible. Also hovering and slow movement may be carried out in order to enable image capturing of the surrounding,

- sufficient loading capacity; i.e. enough payload for a good camera used for capturing aerial images or other equipments as well as fast electronics and/ or storage devices. The storage device should have a capacity at least for 1 h of HD video,

- small energy consumption; i.e. long flight time. Due to buoyancy, the present aircraft should have a flight time of at least one hour and preferably much longer,

- safety; i.e. small risk of damage of persons, objects and the aircraft itself. The system is safe enough to fly over a crowd.

Further, the aircraft should be locatable by GPS. Preferably, the aircraft should be able to follow GPS waypoints.

In a special embodiment, the aircraft comprises more than four actuation units arranged on the surface of the body for movement of the aircraft in a translation and/ or rotation through the air. Further, the aircraft may be provided without a camera.

In a preferred embodiment, the centre of gravity of the proposed system coincides with the centre of buoyancy. Therefore, arbitrary orientations are possible with very little energetic effort. Further, the proposed system has a spherical hull resulting insubstantially equal fluid dynamic properties in any direction. The proposed system can take every position in any of the three angles and maintain it.

A major advantage of the proposed system is the long flight time compared to other systems with similar characteristics. It is achieved by the helium-filled hull that generates a lift due to the smaller density of helium compared to the one of air.

In comparison to multi rotor systems or fixed-wing systems, the actuators do not need to generate the lift, which leads to less power consumption and therefore a long flight time. The product is made slightly heavier than air to allow safe landing in case of motor or electronics breakdown.

Preferably, the hull has two valves, one large valve usable for fast deflation and one small valve equipped with a bung usable for inflation. The large valve is sealed with a rope and is the entry place for a inner pressure sensor, which monitors inner pressure constantly for safety reasons.

The energy supply is provided by three battery packs; alternatively power supply using fuel cells, solar panels, combustion engines or other solutions would be possible. As no lift has to be generated to stay in the air despite gravity influence, less actuation power is needed resulting in longer flight time and a decreased noise level due to actuation when compared to other systems. This is very desirable for many applications.

Another benefit of the aerostatic design concerns the safety. In case of breakdown, the weight of the system is still zero or slightly above leading to a smaller resulting crash damage in comparison to other systems. This is especially important for applications where the system is used above people or animals or sensitive environments.

In addition to the aerostatic concept another major property contributes to the system's performance. The proposed system is preferably designed to have very similar, ideally identical properties in all directions of space. This especially applies for the following properties:

The centre of buoyancy and the centre of gravity are coincident. For a perfect sphere the centre of buoyancy is exactly the centre of the sphere, resulting in that no torques act on the system regardless of its orientation in the gravity field. Therefore, the system is stable but not asymptotically stable. Small disturbances such as wind result in movements that have to be compensated by the actuators if the position shall be maintained. For this reason a control system is implemented, which is explained in more detail below.

The three principal moments of inertia are very similar, ideally identical. Accordingly, rotational properties are equal in every direction of space, i.e. the inertia moments are identical and there are no cross-couplings. These would result in unstable rotational directions and other problems.

The efficiency of the actuation system is evenly distributed in every direction of space, i.e. rotational and translational movements can be performed with the same efficiency in every direction of space. This property is achieved by the tetrahedral motor alignment, which is explained in more detail below.

The maximum resulting forces and torques of the actuation units are very similar in every spatial direction. Also, this property is achieved by the tetrahedral motor alignment.

In a three-dimensional space, six degrees of freedom (DoF) are available. The actuation units of the aircraft can be rotated about an axis perpendicular to the body surface, and their thrust can be adjusted. Therefore, they have two degrees of freedom. To acquire six degrees of freedom, three actuation units are required in order to move the aircraft along one of the three axes und rotate about one of the axes simultaneously. However, in order to optimize the movements and for fail-safety it is preferred to use four actuation units.

In order to guarantee very similar translational and rotation efficiencies in every direction of space, a tetrahedral alignment of those four actuation units was chosen, i.e. they are located on the vertices of an imaginary tetrahedron of maximal size that is inserted into the spherical hull.

As eight degrees of freedom are available, two degrees of freedom are remaining for every non-singular direction. Therefore, optimizations regarding the motor allocation (e.g. direction and strength of thrust of each actuation unit) can be made.

A usual real flying system is made out of discrete components such as motors or electronic devices. Their masses are usually concentrated in very small volumes and cannot be distributed on larger areas. To achieve omnidirectionality as described above, a method is needed to place discrete mass points on a spherical surface. The aircraft according to the invention has a centre of gravity located in the middle of the sphere and identical principal moments of inertia. Even distribution of the mass points is required to achieve such a configuration.

Such a distribution is realized by insertion of an imaginary tetrahedron of maximal size into a hollow sphere, wherein the mass points are placed on its four vertices and on the hull surface.

The aircraft according to the invention comprises two such tetrahedrons. The four identical actuation units are located on the vertices of the first tetrahedron. The three accumulators and an electronic platform of very similar, ideally identical weights are placed on the vertices of the second tetrahedron. The weights of other small components on the hull such as handles, valves or cables are compensated by positioning based on an algorithm, wherein the masses and/or their positions on the edge points are slightly changed.

With the alignment described above it is possible to decouple translation and rotation completely. This is important because on the basis of this property the camera can be directed in an arbitrary direction regardless of the current flight trajectory. The system is arranged for automated flying. For instance, the aircraft can be programmed to fly around an object while simultaneously rotating to keep the camera directed at the object. The imagery can be automatically analyzed to find a moving object, and the aircraft can be automatically directed to move straight and/or rotate in order to keep the camera focused on the moving object.

An important distinction to other systems is also that images of the scenery above the objects can be taken.

As the system is stable but not asymptotically stable, a control system is needed in order to stabilize it. Small disturbances such as wind must be compensated.

The control system is realized by the actuation units acting as actuators and various sensors on the hull surface. They include magnetoscopes, gyroscopic sensors, pressure sensors, temperature sensors, GPS sensors and acceleration sensors.

In order to steer eight degrees of freedom simultaneously, algorithms are needed for the handling of the system. Therefore, different control modes are implemented which permit controlling the trajectories and the orientation of the system using tablet computers with touch screens, 3D-mouses and RC-devices. Manual modes, direct control and assisted modes, e.g. working with GPS waypoints are available. A three-channel communication concept is implemented. Piloting is possible via a Xbee link from the ground station laptop to the aircraft. As a safety backup, a signal of a standard remote control can always bypass the laptop signal.

Image transmission is done by Wi-Fi. As image streaming is always done with lossy compression, a solid state disk on board of the aircraft stores high quality images uncompressed to guarantee best quality for vision algorithms.

The first communication channel is RC. This robust technology is used for emergency control. Xbee is characterized by long range and enough data rate to transmit control commands and telemetry. Wi-Fi is used for the transport of imagery due to its high bandwidth. This combination provides high safety and flexibility in use.

As the system is safe, it can be used for flying over people in different situations without compromising their safety. This ability is important for the applications such as taking souvenir images or movies of people in amusement parks; flying over crowds at events or in amusement parks to record statistical data or to provide images for human controllers (surveillance tasks), or interaction applications with people such as motion detection, communication with people, tracking people or objects.

The necessary equipment for the last point, e.g. loudspeakers or microphones can easily be integrated. The aircraft may also carry an advertisement message. Due to its special appearance, the aircraft attracts the attentions of humans.

In the following, the present invention is described with regard to the examples shown in the attached illustrations.

Fig. 1 shows the aircraft of the present invention together with the tetrahedral alignments,

Fig. 2 shows a side view onto the aircraft,

Fig. 3 shows a perspective viewing of the actuation unit of the aircraft,

Fig. 4 shows the aircraft taking optical information of an object, and

Fig. 5 shows the aircraft flying above a crowd.

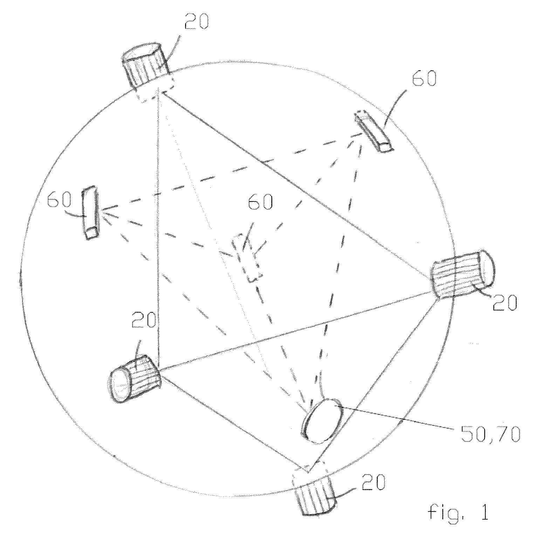

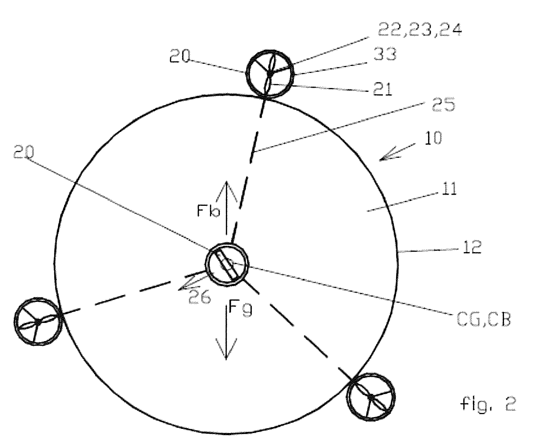

The preferred embodiment of the aircraft is a spherical body 10 or blimp with a non-rigid structure shown in fig. 1 and 2. The aircraft is moved using the thrust generated by actuation units 20, wherein in fig. 1 only the positions of the actuation units 20 are shown but no details of the actuation units. There are all in all four actuation units 20 on the surface 12 of the spherical body 10, arranged in a first tetrahedron or first tetrahedral alignment 40.

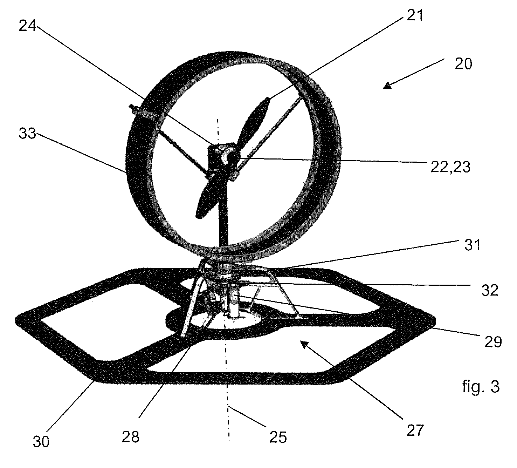

Each of the actuation units 20 comprises a propeller 21, as shown in fig. 3.

The propellers 21 can thrust tangentially to the spherical body 10, and have two degrees of freedom. The magnitude of the thrust or actuation force 26 can be adjusted by an angle adjusting means 27, wherein a position motor 29 adjusts the direction of the thrust tangential to the hull 11 by rotating a position shaft 28. A slip ring 31 or coiling cables (which can be n-times wound) transmit the electrical power and signals through the position shaft 28 from energy supply units 60 or accumulators fixed on the hull 11 (blimp-static) to the thrust motor 24 that rotates. The momentum is transmitted from the position motor 29 to the position shaft 28 by a gear mechanism 32.

Thus, the actuation units 20 never have to be turned back into the initial position, i.e. only little delays in the actuation system may arise. However, the usage of only n-times rotatable servo motors is not excluded from the invention.

The direction of thrust can be changed due to the ability of the actuation unit 20 to rotate around the radial axis 25 positioned radially to the centre of the spherical body 10. In addition to the actuation units 20, an electronic unit 70 is placed on the hull 11. It includes fast electronics such as a central processing unit and sensors. Energy supply units 60 or accumulators are also provided. The electronic unit 70 and the accumulators form a second tetrahedron or second tetrahedral alignment 80. In order to take imagery in every direction of space, the whole system is reoriented. The camera 50 or cameras are connected rigidly to the system and are not movable. The aircraft can be compared to an eye, wherein the pupil can be compared to the camera 50 and the eyeball is the lighter-than-air-gas-filled hull 11. In order to redirect the eye, not the pupil is moved but the whole eyeball is redirected.

The aircraft can move straight in every direction of space and is able to simultaneously rotate around every axis in three-dimensional space. There is no coupling between the translational and the rotational movement. Due to the spherical shape, the tetrahedral alignment of motors and the weight distribution on the hull 11, the mechanical properties in different directions are very similar, ideally identical.

This means that the centre of gravity CG exactly is located in the centre of the spherical body 10, thus no torque is acting on the system in regard to the center of the sphere. In a non-ideal system this does not apply for the geometric center of the sphere but for the center of buoyancy (CB). As there is no gravitational moment of force acting on the system and no asymptotically stable position, all orientations in space are stable but not asymptotically stable. Thus, the system is able to keep stationary in the air in arbitrary positions with very little, ideally no, energy consumption.

Another consequence of the weight distribution on the hull 11 is that the principal moments of inertia are very similar, ideally identical in every direction of space. This means that rotational properties are identical for every rotational axis. As a result, some mechanical phenomena such as unstable rotational axis do not occur in this system.

Due to the spherical shape and the motor alignment, the fluid dynamic properties such as the drag coefficient are very similar in every direction of space. Another idea is to use impellers instead of propellers 21. The impellers are considerably smaller and already offer a kind of protection ring, thereby reducing the weight of the actuation units. A further embodiment of an actuation unit is a jet engine.

Further, the actuation units may be provided in the surface of the body instead of on the surface.

The spherical hull 11 preferably comprises a double membrane, wherein the inner membrane is made out of polyurethane, which is helium impermeable and elastic, and the outer membrane is made of Nylon, which is robust, inextensible and producible by sewing. The inner pressure is slightly higher than the ambient pressure (about 15 mbar).

Fig. 3 shows a perspective viewing of the actuation unit 20 of the aircraft.

The actuation unit 20 comprises a propeller 21 mounted on a shaft 23 forming the propeller axis 22, a thrust motor 24, a protection ring 33 and an angle adjusting means 27. The angle adjusting means 27 comprises a position shaft 28, a position motor 29, a motor platform 30, a gear mechanism 32 and a slip ring 31.

The propeller 11 is driven by the thrust motor via the shaft 23 in order to create the thrust of actuation force 26. The protection ring 33 is stringed with carbon wires in order to prevent any objects to come in contact with the propeller 21, which increases the safety of the system.

In order to change the direction of the actuation force 26, the actuation unit 20 comprises an angle adjusting means 27 coupled to the propeller 11 by the position shaft 28.

The position motor 29 of the angle adjusting means 27 drives a gear mechanism 32, which provides a torque to the positioning shaft 28 turning the actuation unit 20 about a radial axis 25. Thus, the position motor 29 adjusts the direction of the thrust tangential to the hull 11 by rotating the position shaft 28. A slip ring 31 transmits the electrical power and signals through the position shaft 28 from accumulators fixed on the hull 11 (blimp-static) to the thrust motor 24 driving the propeller 21.

The slip ring 31 enables the actuation unit 20 to point in every desired direction without any constraints. An infinite number of rotations in the same direction is possible.

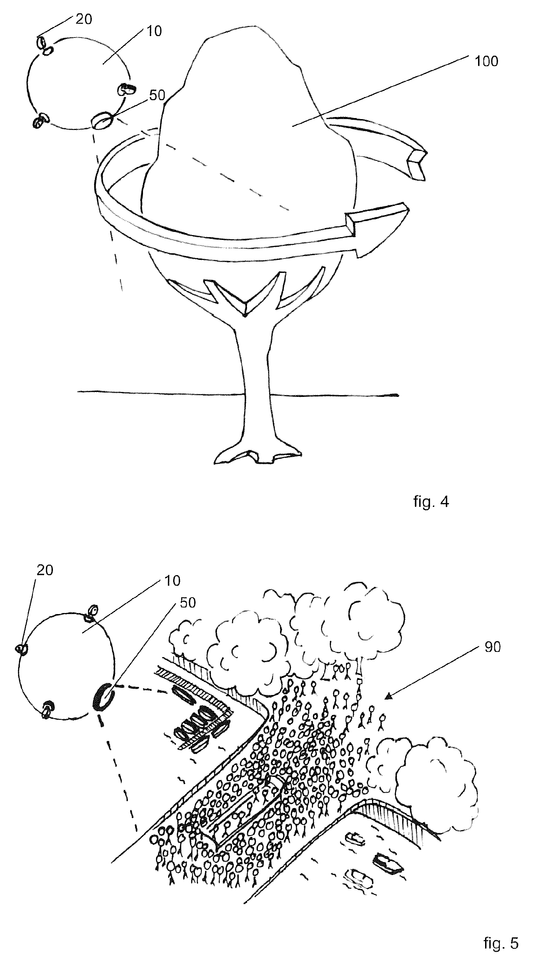

An important application of the system is taking aerial imagery of objects 100 such as natural environments, e.g. trees and forests, as shown in figure 5. These can be used for a three dimensional reconstruction later on. Apart from static objects 100, moving objects can also be recorded. Further, the system can be used for performing inspection tasks, e.g. in tunnels or under bridges due to its ability to take images of objects 100 out of arbitrary directions.

The safety of the system and also its low noise when compared to usual multi rotor systems allow performing surveillance and tracking tasks of animals in parks or natural environments with the system. This means, due to the system's silent motion and safe construction, animals are neither endangered nor scared. Therefore it is ideal for observing wild life in parks. Additionally, taking imagery from very unusual perspectives becomes possible with the aircraft according to the invention.

The unique appearance and its excellent rotation abilities allow the aircraft to perform complex aerial manoeuvres. Such manoeuvres could be performed in swarms of smaller systems or by single aircraft. Aerial performances can also be realized for advertising.

Additionally to performances, the shape of the spherical body 10 also allows the aircraft to act as a display, wherein an image is projected from the inside of the hull 11 or from the ground. Here, advertisement applications are possible, too.

The aerial display and the aerial swarm display are applications that can be performed by this aircraft in a much better way than by prior art systems. Rotations are easy and can be performed very fast.

Equipped with microphones and loudspeakers, the system could be used as a robotic city or nature guide. The system can lead a customer to locations of interest and provide information. Such application may also comprise that the aircraft is positioned at a fixed location, where customers pay. After payment, the aircraft then leads the customer to locations of interest and provides information. Objects of interest and details could be highlighted by the aircraft.

As shown in figure 6, big events can be video recorded safely from above as the aircraft flies above the crowd 90.

<div align="center">

List of reference signs

</div>

| | |
|---|---|
| spherical body | 10 |
| hull | 11 |
| surface | 12 |
| actuation unit | 20 |
| propeller | 21 |
| propeller axis | 22 |
| shaft | 23 |
| thrust motor | 24 |
| radial axis | 25 |
| actuation force | 26 |
| angle adjusting means | 27 |
| position shaft | 28 |
| position motor | 29 |
| motor platform | 30 |
| slip ring | 31 |
| gear mechanism | 32 |
| protection ring | 33 |
| first tetrahedral alignment | 40 |
| camera | 50 |
| energy supply unit | 60 |
| electronic unit | 70 |
| second tetrahedral alignment | 80 |
| crowd | 90 |
| object | 100 |
| gravity force | $F_g$ |

(continued)

| buoyancy force | $F_b$ |
|---|---|
| center of gravity | CG |
| center of buoyancy | CB |

**Claims**

1. Aircraft, having a spherical body (10) which generates buoyancy or which may generate buoyancy when filled with gas, wherein the aircraft further comprises four actuation units (20) arranged on the surface (12) of the body (10) for movement of the aircraft in any arbitrary combination of translation and rotation in three-dimensional space through the air, and at least one camera (50) arranged on or in the surface (12) of the body (10).

2. Aircraft as claimed in claim 1, wherein the body (10) is at least partially filled with gas having less density than air.

3. Aircraft as claimed in claim 2, wherein the gas is helium.

4. Aircraft as claimed in at least one of the preceding claims, wherein the gravity $F_g$ and the buoyancy force $F_b$ of the aircraft fulfill the following condition:

$$F_g = 1 \ldots 1{,}2 \ F_b.$$

5. Aircraft as claimed in at least one of the preceding claims, wherein the center of gravity (CG) of the aircraft substantially coincides with the center of buoyancy (CB) of the aircraft.

6. Aircraft as claimed in at least one of the preceding claims, wherein the four actuation units (20) are positioned in a first tetrahedral alignment (40) on the body (10).

7. Aircraft as claimed in at least one of the preceding claims, wherein the aircraft further comprises at least one energy supply unit (60), and wherein the camera (50) or cameras and the energy supply unit (60) or energy supply units are arranged in a second tetrahedral alignment (80) on and/ or in the body (10).

8. Aircraft as claimed in claim 7, wherein the center of gravity of the system of actuation units (20) substantially coincides with the center of gravity of the system of cameras (50) and energy supply units (60).

9. Aircraft as claimed in at least one of the preceding claims, wherein the actuation unit (20) comprises a propeller (21).

10. Aircraft as claimed in claim 9, wherein the shaft (23) of the propeller (21) is substantially arranged perpendicular related to a radial axis (25) extending radially with regard to the body (10) and is rotatable about that radial axis (25).

11. Aircraft as claimed in claim 10, wherein the actuation unit (20) comprises an angle adjusting means (27) adjusting the rotation angle of the propeller axis (22).

12. Method for providing optical information to a person in the environment of a flying aircraft as claimed in at least one of the claims 1 to 11, wherein an image is projected onto the inner surface of the hollow body (10) so that the image is visible on the outer surface of the body (10).

13. Method for providing optical information about an object and/ or surveying of an object, wherein an image of the object is recorded by a camera (50) of a flying aircraft as claimed in at least one of the claims 1 to 11.

14. Method for transmission of acoustic information by means of a flying aircraft as claimed in at least one of the claims 1 to 11, wherein the aircraft comprises at least one microphone and/ or loudspeaker and acoustic information is provided by the loudspeaker of the aircraft and/ or acoustic information is recorded by the microphone of the aircraft.

15. Method for observing or tracking an object, wherein the object is observed and/ or tracked by a camera of a flying aircraft as claimed in at least one of the claims 1 to 11.

**Patentansprüche**

1. Fluggerät, welches einen sphärischen Körper (10) hat, welcher Auftrieb erzeugt oder welcher Auftrieb erzeugen kann, wenn er mit Gas gefüllt ist, wobei das Fluggerät weiter vier auf der Oberfläche (12) des Körpers (10) angeordnete Betätigungseinheiten (20) zur Bewegung des Fluggeräts durch die Luft in jeder beliebige Kombination aus Translation und Rotation im dreidimensionalen Raum und mindestens eine auf oder in der Oberfläche (12) des Körpers (10) angeordnete Kamera (50) umfasst.

2. Fluggerät nach Anspruch 1, wobei der Körper (10) zumindest teilweise mit Gas, das eine kleinere Dichte als Luft hat, gefüllt ist.

3. Fluggerät nach Anspruch 2, wobei das Gas Helium ist.

4. Fluggerät nach mindestens einem der vorangehenden Ansprüche, wobei die Gravitation $F_g$ und die Auftriebskraft $F_b$ des Fluggeräts die folgende Bedingung erfüllen:

$$F_g = 1 \ldots 1{,}2 \, F_b.$$

5. Fluggerät nach mindesten einem der vorangehenden Ansprüche, wobei ein Zentrum der Schwerkraft (CG) des Fluggeräts im Wesentlichen mit dem Zentrum des Auftriebs (CB) des Fluggeräts zusammenfällt.

6. Fluggerät nach mindestens einem der vorangehenden Ansprüche, wobei die vier Betätigungseinheiten (20) in einer ersten tetraedrischen Ausrichtung (40) auf dem Körper (20) positioniert sind.

7. Fluggerät nach mindestens einem der vorangehenden Ansprüche, wobei das Fluggerät weiter mindestens eine Energieversorgungseinheit (60) umfasst, und wobei die Kamera (50) oder Kameras und die Energieversorgungseinheit (60) oder Energieversorgungseinheiten in einer zweiten tetraedrischen Ausrichtung (80) auf und/ oder in dem Körper (10) angeordnet sind.

8. Fluggerät nach Anspruch 7, wobei das Zentrum der Schwerkraft des Systems der Betätigungseinheiten (20) im Wesentlichen mit dem Schwerpunkt des Systems der Kameras (50) und Energieversorgungseinheiten (60) zusammenfällt.

9. Fluggerät nach mindestens einem der vorhergehenden Ansprüche, wobei die Betätigungseinheit (20) einen Propeller (21) umfasst.

10. Fluggerät nach Anspruch 9, wobei die Welle (23) des Propellers (21) senkrecht mit Bezug auf einer radialen Achse (25) angeordnet ist, welche radiale Achse sich im Wesentlichen radial mit Bezug auf den Körper (10) erstreckt, und drehbar um diese radiale Achse (25) ist.

11. Fluggerät nach Anspruch 10, wobei die Betätigungseinheit (20) ein Winkeleinstellmittel (27) aufweist, um den Drehwinkel der Propellerachse (22) einzustellen.

12. Verfahren, um optische Information einer Person in der Umgebung eines fliegenden Fluggeräts nach mindestens einem der Ansprüche 1 bis 11 bereitzustellen, wobei ein Bild auf die Innenfläche des hohlen Körpers (10) projiziert wird, so dass das Bild auf der Aussenfläche des Körpers (10) sichtbar ist.

13. Verfahren zum Bereitstellen von optischer Information über einen Objekt und/oder zum Überwachen eines Objekts, wobei ein Bild des Objekts durch eine Kamera (50) eines fliegenden Fluggeräts nach mindestens einem der Ansprüche 1 bis 11 aufgezeichnet wird.

14. Verfahren zum Übertragen von akustischer Information mittels eines fliegenden Fluggeräts nach mindestens einem der Ansprüche 1 bis 11, wobei das Fluggerät mindestens ein Mikrophon und/oder einen Lautsprecher umfasst und akustische Information von dem Lautsprecher des Fluggeräts bereitgestellt ist und/oder akustische Information vom Mikrophon des Fluggeräts erfasst wird.

15. Verfahren zum Beobachten oder Verfolgen eines Objekts, wobei das Objekt von einer Kamera eines fliegenden Fluggeräts nach mindestens einem der Ansprüche 1 bis 11 beobachtet und/oder verfolgt wird.

**Revendications**

1. Un aéronef, ayant un corps sphérique (10) qui génère une flottaison ou qui peut générer une flottaison lorsqu'il est rempli de gaz, dans lequel l'aéronef comprenant d'avantage quatre unités d'actionnement (20) agencées sur la surface (12) du corps (10) pour un mouvement de l'aéronef suivant une quelconque combinaison arbitraire de translation et/ou de rotation dans l'espace tridimensionnel à travers l'air, et au moins une caméra (50) agencée sur ou dans la surface (12) du corps (10).

2. Un aéronef comme revendiqué dans la revendication 1, dans lequel le corps (10) est au moins partiellement rempli de gaz ayant une densité inférieure à l'air.

3. Un aéronef comme revendiqué dans la revendication 2, dans lequel le gaz est de l'hélium.

4. Un aéronef comme revendiqué dans au moins une des revendications précédentes, dans lequel la force de gravité $F_g$ et de flottaison $F_b$ de l'aéronef remplissent les conditions suivantes :

$$F_g = 1 \ldots 1{,}2 \, F_b$$

5. Un aéronef comme revendiqué dans au moins une des revendications précédentes, dans lequel le centre de gravité (CG) de l'aéronef coïncide essentiellement avec le centre de flottaison (CB) de l'aéronef.

6. Un aéronef comme revendiqué dans au moins une des revendications précédentes, dans lequel les quatre unités d'actionnement (20) sont positionnées dans un premier alignement tétraédrique sur le corps (10).

**7.** Un aéronef comme revendiqué dans au moins une des revendications précédentes, dans lequel l'aéronef comprend d'avantage au moins une unité d'alimentation énergétique (60), et dans lequel la caméra (50) ou les caméras et l'unité d'alimentation énergétique (60) ou les unités d'alimentation énergétique sont disposées dans un deuxième alignement tétraédrique (80) sur et/ou dans le corps (10).

**8.** Un aéronef comme revendiqué dans la revendication 7, dans lequel le centre de gravité du système des unités d'actionnement (20) coïncide essentiellement avec le centre de gravité du système de caméra (50) et des unités d'alimentation énergétique (60).

**9.** Un aéronef comme revendiqué dans au moins une des revendications précédentes, dans lequel l'unité d'actionnement (20) comprend une hélice (21).

**10.** Un aéronef comme revendiqué dans la revendication 9, dans lequel l'arbre (23) de l'hélice (21) est essentiellement disposé de manière perpendiculaire par rapport à un axe radial (25) s'étendant radialement par rapport au corps (10) et est rotatif autour de cet axe radial (25).

**11.** Un aéronef comme revendiqué dans la revendication 10, dans lequel l'unité d'actionnement (20) comprend un moyen d'ajustement d'angle (27) ajustant l'angle de rotation de l'axe de l'hélice (22).

**12.** Procédé pour fournir de l'information optique à une personne dans l'environnement d'un aéronef volant comme revendiqué dans au moins une des revendications 1 à 11, dans lequel une image est projetée sur la surface intérieure du corps creux (10) de sorte que l'image est visible sur la surface extérieure du corps (10).

**13.** Procédé pour fournir de l'information optique concernant un objet et/ou la surveillance d'un objet, dans lequel une image de l'objet est enregistrée par une caméra (50) d'un aéronef volant comme revendiqué dans au moins une des revendications 1 à 11.

**14.** Procédé pour la transmission d'information acoustique au moyen d'un aéronef volant comme revendiqué dans au moins une des revendications 1 à 11, dans lequel l'aéronef comprend au moins un microphone et/ou hautparleur et l'information acoustique est fournie par un haut-parleur de l'aéronef et/ou l'information acoustique est enregistrée par le microphone de l'aéronef.

**15.** Procédé pour observer ou suivre un objet, dans lequel l'objet est observé et/ou suivi par une caméra d'un aéronef volant comme revendiqué dans au moins une des revendications 1 à 11.

fig. 1

fig. 2

fig. 3

fig. 4

fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4848705 A
- US 5082205 A
- US 5383627 A
- US 7055777 B
- US 20070023581 A
- DE 10210542